# EUROPÄISCHE PATENTSCHRIFT

(11) **EP 2 443 174 B1**
(45) Veröffentlichungstag und Bekanntmachung des Hinweises auf die Patenterteilung: **28.08.2013**
(21) Anmeldenummer: 10724087.1
(22) Anmeldetag: 15.06.2010
(51) Int. Cl.: C08G 69/36, C08L 77/00

(54) **COPOLYAMIDE**
COPOLYAMIDES
COPOLYAMIDES

(30) Priorität: 19.06.2009 DE 102009025537
(43) Veröffentlichungstag der Anmeldung: 25.04.2012
(73) Patentinhaber: BASF SE, 67056 Ludwigshafen (DE)
(72) Erfinder: SCHMIDT, Christian, 67061 Ludwigshafen (DE); EL-TOUFAILI, Faissal-Ali, 67063 Ludwigshafen (DE); DESBOIS, Philippe, 68535 Edingen-Neckarhausen (DE); FERNANDEZ RODILES, Raquel, 68161 Mannheim (DE)
(86) Internationale Anmeldenummer: PCT/EP2010/058392
(87) Internationale Veröffentlichungsnummer: WO 2010/146054

(56) Entgegenhaltungen:
- WO-A2-2010/018220
- DE-A1- 1 918 235
- DE-A1- 3 415 044
- DE-B- 1 114 728
- DE-B- 1 241 490
- DE-C- 755 617
- GB-A- 1 111 076
- GB-A- 1 423 948
- US-A- 3 449 287
- BASF: "Ultramid 1C the soluble polyamide" INTERNET CITATION Juli 2007 (2007-07), Seiten 1-4, XP002570183 Gefunden im Internet: URL:http://www.plasticsportal.net/wa/plast icsEU~en_GB/function/conversion s:/publish/common/upload/engineering_plast ics/Ultramid_1C.pdf [gefunden am 2010-02-18]

## Beschreibung

Die Erfindung betrifft Terpolymere aus Lactamen, äquimolaren Mengen von Adipinsäure und aliphatischen Diaminen sowie äquimolaren Mengen von Adipinsäure und 4,4'-Diaminodicyclohexylmethan (Dicycan) und deren alkoholische Lösungen, Verfahren zu ihrer Herstellung und ihre Verwendung zum Beschichten von festen Oberflächen.

Polyamid-6/6.6/Dicycan-Terpolymere und deren Einsatz zur Beschichtung fester Oberflächen sind an sich bekannt. Die DE 755 617 betrifft Verfahren zur Herstellung von Kondensationsprodukten, bei denen es sich u. a. um Polyamid-6/6.6/Dicycan-Terpolymere handeln kann. Lösungen der Polymere werden in einem Methanol, Benzol oder Toluol und gegebenenfalls Wasser enthaltenden Lösungsmittel hergestellt.

Die erhaltenen Terpolymere weisen nicht für alle Anwendungen ausreichend hohe Glasübergangstemperaturen auf. Zudem sind die aromatenhaltigen Lösungen gesundheitsgefährdend und nur aufwendig zu entsorgen.

Aufgabe der vorliegenden Erfindung ist die Bereitstellung von Lösungen von insbesondere Polyamid-6/6.6/Dicycan-Terpolymeren, die die Nachteile der bekannten Lösungen vermeiden. Zudem sollen entsprechende Terpolymere bereitgestellt werden, die insbesondere eine erhöhte Glasübergangstemperatur aufweisen und bessere Anwendungseigenschaften zeigen.

Die Aufgabe wird erfindungsgemäß gelöst durch eine Lösung, enthaltend ein Terpolymer aus den Monomeren der Komponenten A, B und C, deren Gesamtmenge 100 Gew.-% ergibt,
a. 20 bis 30 Gew.-% Lactame als Komponente A,
b. 20 bis 27,5 Gew.-% äquimolare Mengen von Adipinsäure und einem oder mehreren aliphatischen Diaminen als Komponente B,
c. 45 bis 55 Gew.-% äquimolare Mengen von Adipinsäure und 4,4'-Diaminodicyclohexylmethan (Dicycan) als Komponente C,
   in einem aromatenfreien Lösungsmittelsystem, enthaltend
   50 bis 100 Gew.-% C₁₋₄-Alkanol,
   0 bis 50 Gew.-% Wasser und
   maximal 10 Gew.-% weitere aromatenfreie Lösungsmittel,
wobei die Gesamtmenge des Lösungsmittelsystems 100 Gew.-% ergibt.

Die Aufgabe wird zudem gelöst durch ein Terpolymer aus den Monomeren der Komponenten A, B und C, deren Gesamtmenge 100 Gew.-% ergibt,
a) 20 bis 30 Gew.-%, vorzugsweise 20 bis 40 Gew.-% Lactame als Komponente A,
b) 20 bis 27,5 Gew.-%, vorzugsweise 20 bis 40 Gew.-% äquimolare Mengen von Adipinsäure und einem oder mehreren aliphatischen Diaminen als Komponente B,
c) 45 bis 55 Gew.-%, vorzugsweise 30 bis 60 Gew.-% äquimolare Mengen an Adipinsäure und 4,4'-Diaminodicyclohexylmethan (Dicycan) als Komponente C.

Die Gewichtsangaben der Polymere beziehen sich auf die Monomereinwaage im Ansatz und nicht auf die Wiederholeinheiten im Polymer.

Es wurde erfindungsgemäß gefunden, dass die vorstehend angegebenen Terpolymere in einem aromatenfreien Lösungsmittelsystem, das in der Regel überwiegend C₁₋₄-Alkanol enthält, gut löslich sind und entsprechende Lösungen gut zur Beschichtung von festen Oberflächen einsetzbar sind. Zudem wurde gefunden, dass die erfindungsgemäßen Terpolymere ein vorteilhaftes Spektrum von mechanischen Eigenschaften und Anwendungseigenschaften zeigen, die sie besonders vorteilhaft zum Beschichten von festen Oberflächen einsetzbar machen. Eine erhöhte Glastemperatur verbessert insbesondere die Lager- und Transportstabilität der Beschichtungssysteme.

Das aromatenfreie Lösungsmittelsystem enthält keine aromatischen Kohlenwasserstoffe, insbesondere kein Benzol und Toluol. Es enthält vorzugsweise 70 bis 100 Gew.-%, besonders bevorzugt 80 bis 100 Gew.-% C₁₋₄-Alkanol, 0 bis 30 Gew.%, besonders bevorzugt 0 bis 20 Gew.-% Wasser und maximal 5 Gew.-%, besonders bevorzugt maximal 2,5 Gew.-%, insbesondere maximal 1 Gew.-% weitere Lösungsmittel, wobei die Gesamtmenge des Lösungsmittelsystems 100 Gew.-% ergibt. Besonders bevorzugt liegen nur C₁₋₄-Alkanol und Wasser im Lösungsmittelsystem vor. Als C₁₋₄-Alkanole können alle entsprechenden Alkanole eingesetzt werden. Bevorzugt ist der Einsatz von Methanol, Ethanol, n-Propanol oder Isopropanol sowie von Gemischen davon. Besonders bevorzugt wird Methanol eingesetzt.

Als Lactame der Komponente A können beliebige geeignete Lactame eingesetzt werden. Besonders bevorzugt wird Caprolactam eingesetzt. Die aliphatischen Diamine der Komponente B sind bevorzugt endständige lineare C₄₋₁₂-Alkylendiamine, besonders bevorzugt C₄₋₈-Alkylendiamine, insbesondere Hexamethylendiamin.

Die Terpolymere sind aus den Monomeren A, B und C aufgebaut. Zur Einstellung des jeweiligen Endgruppengehalts können geringfügige zusätzliche Mengen an Mono- oder Dicarbonsäuren oder Mono- oder Diaminen vorliegen. Auch der Zusatz geringer Mengen copolymerisierbarer Comonomere (maximal 5 Gew.%, besonders bevorzugt maximal 2,5 Gew.-%, insbesondere 1 Gew.-%, bezogen auf die Gesamtmenge der Monomere) ist möglich. Besonders bevorzugt enthält das Terpolymer nur die Monomere der Komponenten A, B und C.

Die erfindungsgemäßen Terpolymere enthalten, wobei die Gesamtmenge 100 Gew.-% ergibt, 20 bis 30 Gew.-% der Komponente A, 20 bis 27,5 Gew.-% der Komponente B und 45 bis 55 Gew.-% der Komponente C. Speziell bevorzugt ist ein Terpolymer auf Basis von 25 Gew.-% der Komponente A, 25 Gew.% der Komponente B und 50 Gew.-% der Komponente C, wobei die jeweiligen Mengen um ± 20 %, vorzugsweise ± 10 %, insbesondere ± 5 % variieren können.

Die erfindungsgemäßen Terpolymere oder Lösungen können für beliebige Beschichtungen eingesetzt werden. Insbesondere kann es sich um Lacke oder Filme handeln.

Die erfindungsgemäßen Terpolymere bzw. die erfindungsgemäßen, Terpolymere enthaltenden Lösungen werden zum Beschichten von festen Oberflächen, z. B. Kabeln und Drähten, eingesetzt. Hierzu können die Beschichtungslösungen alle üblichen geeigneten Zusätze aufweisen. Bevorzugt enthalten die Lösungen zusätzlich Flammschutzmittel, Viskositätsmodifikatoren, Fließmittel, Filmbildungshilfen, Haftvermittler oder Gemische davon. Auch sonstige übliche Additive können vorliegen.

Die erfindungsgemäßen Terpolymere können durch beliebige geeignete Verfahren hergestellt werden. Bevorzugt erfolgt die Herstellung durch Umsetzen der monomeren Komponenten A, B und C unter Wasserzusatz bei einer Temperatur im Bereich von 210 bis 290°C, vorzugsweise 260 bis 280°C und einem Druck im Bereich von 0.3 bis 5 MPa (3 bis 50 bar) vorzugsweise 0.5 bis 2 MPa. (5 bis 20 bar).

Unterschiedliche mögliche Herstellungsverfahren sind nachfolgend näher erläutert.

Gemäß einer Ausführungsform der Erfindung erfolgt die Durchführung eines Verfahrens zur Herstellung von Polyamiden im Kesselreaktor mit nachfolgendem Extruder. Dabei wird ausgehend von Lactam, Diaminen und Dicarbonsäuren sowie Dicycan ein stöchiometrisches Monomerengemisch im Batch-Verfahren in einem Rührkesselreaktor umgesetzt. Hierbei werden etwa 90 % der funktionellen Endgruppen, d. h. Carboxyl- und Aminoendgruppen umgesetzt, so dass ein Präpolymer mit niedrigem Molekulargewicht resultiert. Aufgrund der Kondensationsreaktion entsteht Wasser, so dass sich im Reaktor bei eingestellter Umsetzungstemperatur ein Druck aufbaut. Sobald die Umsetzung das Gleichgewicht erreicht hat und ein konstanter Druck resultiert, kann wahlweise der Druck abgelassen werden, wobei Wasser und gegebenenfalls Monomere gasförmig abgeführt werden, oder die Umsetzung wird noch bei konstantem Druck fortgeführt. Das Präpolymer wird sodann in einen Extruder überführt, in dem es bei Temperaturen oberhalb des Schmelzpunktes unter Ausschleusung von Wasser und gegebenenfalls Monomeren bzw. Oligomeren weiter umgesetzt wird. In den Extruder werden keine separaten Monomere zudosiert, sondern nur das Vorkondensat mit der ausgeglichenen Stöchiometrie aus dem gerührten Kesselreaktor wird überführt Die angewandten Temperatur- und Druckprofile sind abhängig vom jeweiligen Polyamid bzw. der gewünschten Viskosität des Endprodukts. Beispielsweise kann im Rührkesselreaktor für eine Zeit von 2 Stunden umgesetzt werden, wobei der Druck auf 16 bar ansteigt. Bei Erreichen einer Druckkonstanz kann für weitere zwei Stunden die Temperatur gehalten werden, bevor mit dem Abführen mittels eines Doppelschneckenextruders begonnen wird.

Es können auch zwei Kesselreaktoren abwechselnd betrieben werden, wobei die jeweils hergestellten Präpolymere in den Extruder überführt werden.

In einer alternativen Ausführungsform wird ein Vorlagebehälter für den Extruder zwischen Rührkesselreaktor und Extruder zwischengeschaltet. Im Vorlagebehälter erfolgt keine weitere chemische Umsetzung des Präpolymers. Typischerweise wird die Temperatur aus dem Rührkesselreaktor auch im Vorlagebehälter gehalten, wobei das Präpolymer in der Regel unter Druck (bis 30 bar) gehalten wird. Das Präpolymer/WasserGemisch wird sodann in den Extruder entspannt.

Alternativ erfolgt die Herstellung durch ein Verfahren in einem Extruder, bei dem man ein festes Gemisch, enthaltend das Monomerengemisch, in einem gleichläufigen Doppelschneckenextruder für eine Verweilzeit von 10 Sekunden bis 30 Minuten auf eine Temperatur im Bereich von 150 bis 400 °C unter Entfernung von Wasserdampf und gegebenenfalls Diaminen durch Entgasungsöffnungen erhitzt.

Das Verfahren geht von einem festen Gemisch aus, das ein Monomerengemisch enthält. Das feste Gemisch kann noch weitere Inhaltsstoffe enthalten wie Fasern, Füllstoffe, Farbstoffe oder Hilfsstoffe. Typischerweise liegt das Monomerengemisch in Salzform vor, wobei vor der Umsetzung im Extruder das bei der Salzbildung entstehende Wasser möglichst vollständig entfernt wird. Verbleibendes Restwasser kann im Extruder durch Entgasungsöffnungen entfernt werden. Typische Wassergehalte für ein festes Monomerengemisch liegen im Bereich von 5 bis 30 Gew.-%, bevorzugt 10 bis 20 Gew.-% des Monomerengemisches.

Die Umsetzung wird erfindungsgemäß in einem gleichläufigen Extruder durchgeführt, der Entgasungsöffnungen aufweist. Geeignete Extruder sind dem Fachmann bekannt und beispielsweise in DE-A-195 14 145 beschrieben.

Die Verweilzeit im Extruder beträgt 10 Sekunden bis 30 Minuten, vorzugsweise 10 Sekunden bis 20 Minuten, insbesondere 30 Sekunden bis 5 Minuten.

Die Umsetzung erfolgt bei einer Temperatur im Bereich von 150 bis 400 °C, vorzugsweise 200 bis 330 °C. Speziell kann die Temperatur 250 bis 330 °C, insbesondere 260 bis 330 °C betragen.

Der Druck im Extruder stellt sich von selbst ein und wird darüber hinaus auch über den Anteil an über die Entgasungsöffnungen entfernten Wasserdampf und Diamin eingestellt.

Vorzugsweise werden das aus den Entgasungsöffnungen abgeführte Diamin und Wasser zumindest teilweise kondensiert, und das so erhaltene Diamin wird in den Extruder zurückgeführt. Beispielsweise können die Austräge aus den Entgasungsöffnungen zusammengefasst und in einer Kolonne aufgetrennt werden, wobei über Kopf Wasserdampf abgezogen wird, während im Sumpf ein Diamin/Wasser-Kondensat ausgeschleust und in den Extruder zurückgeführt wird.

Erfindungsgemäß ist es möglich, eine Compoundierung mit Fasern, Füllstoffen, Farbstoffen oder Hilfsstoffen direkt im Extruder durchzuführen. Dazu werden die Fasern, Füllstoffe, Farbstoffe, Hilfsstoffe oder deren Gemische zusätzlich zum Monomerengemisch direkt dem Extruder zugeführt. Hierdurch lassen sich weitere Verarbeitungsschritte einsparen.

An die erfindungsgemäße Extrusion können sich weitere Verarbeitungsschritte wie eine Festphasen-Nachkondensation und ein Granulierungsschritt anschließen. Diese

Verfahren sind an sich bekannt und beispielsweise in der eingangs aufgeführten Literatur beschrieben.

Fasern und Füllstoffe sind beispielsweise in der EP-A-0 667 367 als Komponente (B) aufgeführt.

Auch übliche Zusatzstoffe wie Stabilisatoren und Oxidationsverzögerer, Mittel gegen Wärmezersetzung, Zersetzung durch ultraviolettes Licht, Gleit- und Entformungsmittel, Farbstoffe, Pigmente und Weichmacher sind in der EP-A-0 667 367 beschrieben. Die erfindungsgemäß hergestellten Polyamide haben vorzugsweise eine Glasübergangstemperatur im Bereich von 60 bis 95°C und eine Schmelztemperatur im Bereich von 170 bis 270°C. Sie weisen vorzugsweise eine sehr geringe (z. B. unter 15 %) oder keine Kristallinität auf und sind transparent.

Die Herstellung des Monomerengemisches kann beispielsweise durch Trocknung wässriger Monomerenlösungen, durch Ausfällung bei Verminderung der Temperatur oder durch Entgasung eines Teils des Wassers oder durch Vermischen getrennter Salze erfolgen.

Die Polyamide werden typischerweise nach der Polymerisation/Polykondensation granuliert, mit Wasser extrahiert, um verbleibende Monomere und Dimere zu entfernen, und nachfolgend zur Erhöhung des Molekulargewichts bzw. der Viskosität nachkondensiert. Hierbei muss die während der Extraktion eingetragene Feuchtigkeit aus dem Polyamidgranulat entfernt werden. Hierzu sind unterschiedliche Verfahren bekannt.

Eine Extraktverminderung wird erreicht durch ein kontinuierliches Verfahren zur Vortrocknung und Nachkondensation von Polyamidgranulat in fester Phase, bei dem
1) die Vortrocknung in einem kontinuierlichen Trocknungsapparat (z.B. einem Schachttrockner, z. B. mit Wanderbett, Fließbetttrockner, Wirbel-/Pulsbetttrockner) durchgeführt wird, der im Gegenstrom oder im Kreuzstrom mit Inertgas, Wasserdampf oder einem Gemisch aus Inertgas und Wasserdampf bei einer Granulattemperatur im Bereich von 70 bis 200°C betrieben wird und
2) die nachfolgende kontinuierliche Nachkondensation in einem separaten Schacht mit Wanderbett bei einer Granulattemperatur, die über, gleich oder unter der Granulattemperatur in Stufe (1) liegen kann und im Bereich von 120 bis 210°C, liegt, durchgeführt wird, wobei der Schacht im Gegenstrom mit Inertgas, Wasserdampf oder einem Gemisch aus Inertgas und Wasserdampf betrieben wird, das Inertgas an mindestens zwei Stellen entlang des Schachtes zugeführt wird, wobei 15 bis 90% des Inertgases am Boden des Schachtes und 10 bis
85% des Inertgases in der oberen Hälfte, vorzugsweise im oberen Drittel unterhalb der Granulatoberfläche zugeführt werden.

Die Vortrocknung (Stufe 1) wird bei einer Granulattemperatur im Bereich von 70 bis 200°C, vorzugsweise 120 bis 180°C, insbesondere 140 bis 180°C durchgeführt.

Die Nachkondensation wird bei einer Granulattemperatur, die über, unter oder gleich der Granulattemperatur in Stufe (1) liegt oder ist, durchgeführt. Diese Granulattemperatur in Stufe (2) liegt im Bereich von 120 bis 210 °C vorzugsweise im Bereich von 160 bis 180 °C, insbesondere im Bereich von 165 bis 175 °C.

Die Temperatur in Stufe (2) wird in Abhängigkeit des gewünschten Molekulargewichts bzw. der gewünschten Viskosität des Polyamids und der Verweilzeit in den 2 Stufen gewählt. Für höhere Viskositäten bzw. höhere Molekulargewichte werden höhere Temperaturen eingesetzt.

Die Vortrocknung wird vorzugsweise bei einem Druck im Bereich von 1 bis 10 bar abs., insbesondere im Bereich von 1 bis 5 bar abs. durchgeführt. Die Nachkondensation wird vorzugsweise bei einem Druck im Bereich von 1 bis 10 bar abs., insbesondere im Bereich von 1 bis 5 bar abs. durchgeführt. Ein Überdruck wird in der Regel eingestellt, um das Eindringen von Luft (Sauerstoff) zu verhindern.

Erfindungsgemäß wird das Inertgas, Wasserdampf bzw. das Inert-gas/Wasserdampfgemisch in Stufe (2) an mindestens zwei Stellen entlang des Schachtes zugeführt, wobei 15 bis 95% des Inertgases bzw. des Inert-gas/Wasserdampfgemisches am Boden des Schachtes und 5 bis 85% des Inertgases bzw. des Inertgas/Wasserdampfgemisches im oberen Drittel unterhalb des Schachtkopfes zugeführt werden. Hierbei wandert das Granulat mittels Schwerkraft vom Schachtkopf zum Schachtboden und wird so im Gegenstrom mit Inertgas, Wasserdampf bzw. Inertgas/Wasserdampfgemisch behandelt.

Vorzugsweise werden in Stufe (2) 30 bis 90 % des Inertgases, Wasserdampfs bzw. des Inertgas/Wasserdampfgemisches, insbesondere 50 bis 85 % des Inertgases, Wasserdampfs bzw. des Inertgas/Wasserdampfgemisches am Boden des Schachtes und 10 bis 70 %, besonders bevorzugt 15 bis 50 % des Inertgases, Wasserdampfs oder Inertgas/Wasserdampfgemisches in der oberen Hälfte, z. B. im oberen Drittel oder im Bereich von 1/8 bis 3/8 der Schachtlänge unterhalb der Granulatoberfläche zugeführt. Wenn der Schacht vollständig gefüllt ist, sind Schachtkopf und Granulatoberfläche auf gleicher Höhe. In einer Ausführungsform erfolgt die Zuführung des Inertgases bzw. des Inertgas/Wasserdampfgemisches am Boden des Schachtes und auf etwa ¼ der Schachtlänge unterhalb des Granulat-Levels.

Die Dimensionierung des Schachtes erfolgt bevorzugt so, dass an der Granulatoberfläche die Gasgeschwindigkeit den Wirbelpunkt nicht erreicht.

Als Trocknungs- bzw. Extraktionsmedium können in den Stufen (1) und (2) beliebige geeignete Inertgase eingesetzt werden. Vorzugsweise werden in Stufe (1) Wasserdampf, Stickstoff oder Gemische davon als Trocknungsmedium und in Stufe (2) Stickstoff mit einem Wasserdampf-Anteil von 0 bis 90 Gew.-%, vorzugsweise 0 bis 10 Gew.-% als Trocknungs- bzw. Extraktionsmedium eingesetzt. Vorzugsweise wird in Stufe 1 und 2 ein sauerstofffreies Trocknungs- bzw. Extraktionsmedium eingesetzt.

In Stufe (1) wird vorzugsweise 1 bis 20 kg Inertgas, Wasserdampf bzw. Inert-gas/Wasserdampfgemisch, besonders bevorzugt 2 bis 10 kg Inertgas bzw. Inert-gas/Wasserdampfgemisch pro kg Polyamid eingeführt.

In Stufe (2) werden vorzugsweise mindestens 0,5 kg Inertgas, Wasserdampf bzw. Inertgas/Wasserdampfgemisch pro kg Polyamid, besonders bevorzugt 1 bis 7 kg Inertgas bzw. Inertgas/Wasserdampfgemisch pro kg Polyamid in den Schacht eingeführt.

Das durch die Vortrocknung und durch die Nachkondensation jeweils geführte Inertgas bzw. Inertgas/Wasserdampfgemisch kann nach seinem Austritt verworfen werden. Vorzugsweise wird das Inertgas bzw. Inertgas/Wasserdampfgemisch nach einer Aufbereitung jedoch teilweise oder ganz ins Verfahren zurückgeführt.

Das in Stufe (1) den Apparat verlassende, beladene Trocknungsmedium wird vorzugsweise behandelt und teilweise oder ganz ins Verfahren zurückgeführt. Die Behandlung erfolgt durch Gaswäsche bei einer Temperatur unter 60 °C, vorzugsweise unterhalb von 45 °C. Um eine Aufpegelung von Verunreinigungen im Inertgas zu vermeiden, werden, wenn notwendig in Stufe (1) vorzugsweise 0,1 bis 10 Gew.-%, insbesondere etwa 1 Gew.-% des den Apparat verlassenden Trocknungsmediums durch frisches Medium ersetzt.

Das in Stufe (2) den Schacht am Kopf verlassende beladene Trocknungs- bzw. Extraktionsmedium wird vorzugsweise behandelt und teilweise oder ganz ins Verfahren zurückgeführt. Beispielsweise werden 0,1 bis 10 Gew.-% des den Schacht verlassenden Extraktionsmediums durch frisches Extraktionsmedium ersetzt. Die Behandlung erfolgt analog zu Stufe 1, z. B. durch Gaswäsche. Optional kann das beladene Trocknungs- bzw. Extraktionsmedium aus Stufe (2) zum Aufheizen/Trocknen in Stufe (1) eingesetzt werden.

In einer anderen Ausführungsform wird das Trocknungsmedium aus der Stufe 1 nach Behandlung in die Stufe 2 geführt.

Die Verweilzeit des Granulats in Stufe (1) beträgt vorzugsweise 0,2 bis 15 Stunden, besonders bevorzugt 0,5 bis 10 Stunden.

Die Verweilzeit in Stufe (2) beträgt vorzugsweise 5 bis 80 Stunden, insbesondere 20 bis 40 Stunden.

Die Trocknung und Nachkondensation kann apparativ beispielsweise wie in EP-B-1 235 671 beschrieben, ausgelegt und durchgeführt werden. Beispielsweise kann in Stufe (1) ein Kreuzstromtrockner eingesetzt werden. Alternativ kann in Stufe (1) auch ein Schachttrockner, Bandtrockner oder Wirbelbett eingesetzt werden.

In Stufe (2) wird vorzugsweise ein Schachttrockner eingesetzt. An den Schachttrockner kann sich ein Kühlapparat anschließen. Geeignete Geometrien der Vorrichtungen sind in der EP-B-1 235 671 in der Beschreibung und in den Zeichnungen aufgeführt.

Hierbei sei insbesondere auf die Verfahrensweise mit aktivem Schacht verwiesen, der einen zusätzlichen Inertgaskreislauf aufweist, siehe die Absätze [0032] bis [0037] der EP-B-1 235 671.

Eine realisierbare Feuchteabreicherung (Trocknung im Sinne der Erfindung) führt beim Polyamidgranulat in der Regel von einer Anfangsfeuchte von etwa 3 bis 15 Gew.-% auf Werte im Bereich von 0,02 bis 4 Gew-%.

Das aus der Extraktion kommende in der Vortrocknung eingesetzte Polyamid weist einen Gehalt an Restmonomeren im Bereich von größer 0 bis 0,08 Gew.-% auf. Vorzugsweise wird in den Vortrockner ein Polyamid eingebracht, in dem der Gehalt an Restmonomer weniger als 0,05 oder 0,03 Gew.-% und an cyclischem Restdimer weniger als 0,1 oder 0,08 Gew.-% beträgt. Gemäß einer Ausführungsform der Erfindung ist der Restmonomergehalt am Ausgang der Stufe 2 größer als am Eingang der Stufe 1.

Durch die Abtrennung von Monomeren und Dimeren in der Extraktion wird zuverlässig verhindert, dass sich Ablagerungen und Beläge auf den Apparaten bilden und letztendlich die Schächte und Brüdenleitung verstopft werden könnten.

In Stufe (2) wird ein separater Schacht oder Schachttrockner eingesetzt, den das Polyamid aufgrund der Schwerkraft in einem Wanderbett durchströmt. Über den Durchsatz und den Granulatstand im Schacht können unterschiedliche Verweilzeiten eingestellt und zusammen mit dem Einfluss unterschiedlicher Temperaturen Produkte unterschiedlichen Molekulargewichts hergestellt werden. Zweckmäßigerweise schließt man im Schachttrockner den Luftsauerstoff aus, da dieser mit dem heißen Polymergranulat reagiert, was bei dem Fertigprodukt zu so genannter Verfärbung führt.

Die Vorschaltung der Stufe 1 ist unter anderem notwendig, um die Restfeuchte aus der Extraktion abzuführen, bevor das Granulat in den Schachttrockner (Stufe 2) gelangt. Andernfalls könnte durch die benötigte Verdampfungswärme die Gastemperatur bis unter die Kondensationstemperatur der Brüden abgesenkt werden, und das Granulat würde verkleben.

Die Entkopplung von Trocknung und Nachkondensation gestattet es, beide Verfahrensschritte auf individuell eingestellten Temperaturniveaus zu betreiben. Zudem kann die Granulatverweilzeit jeweils variabel eingestellt werden. Durch die Auslegung der Größe und durch den Füllgrad von Vortrockner und Nachkondensator kann erreicht werden, dass bei insgesamt gleich bleibendem Massenstrom unterschiedliche Verweilzeiten resultieren.

Die Erfindung wird durch die nachstehenden Beispiele näher erläutert.

### Beispiele

### Herstellung des Monomeren-Salzes

Zur Herstellung des Salzes wurde eine Rührapparatur verwendet. Sie bestand aus einem 2-I-Glasgefäß mit zugehöriger Metallplatte, die mit Hilfe von Schrauben und einem Dichtring auf dem Gefäß fixiert wurde. Über Öffnungen am Boden konnte die Salzlösung gleichmäßig abgelassen werden. Das Glasgefäß war an einen Umwälzthermostaten angeschlossen, um die Salzlösung aufzuheizen und die erforderliche Temperatur in der Lösung einzustellen. An der Metallplatte war ein Ankerrührer zur gleichmäßigen Vermischung der Chemikalien angebracht. Auf der Metallplatte wurden ein Trichter und zur Kühlung ein Intensivkühler im Rückfluss mit Wasser als Kühlmedium befestigt. Zur Inertisierung war das Gefäß über die Metallplatte mit einer Stickstoff-Gasleitung verbunden.

Zunächst wurde festes Dicycan in leicht siedendem Wasser aufgeschmolzen. Anschließend war Wasser im 2-I-Glasgefäß unter Rückflusskühlung, konstanter Stickstoffzufuhr (10 I h-1) und Rührdrehzahl n = 200 min-1 vorzulegen und der Thermostat auf 45 °C zu temperieren.

Caprolactam, AH-Salz und Adipinsäure waren dann nacheinander hinzu gegeben. Dieser Lösung wurde das aufgeschmolzene Dicycan unter Beachtung der Temperatur der Salzlösung zugetropft, wobei 60 °C nicht überschritten werden sollten. Das Gefäß war mit einem Glasstopfen zu verschließen, die Temperatur am Thermostaten auf 95 C zu erhöhen, und es war bis zur Einstellung der Homogenität zu rühren.

Nach Ablassen der Lösung in eine Trockenschale fiel das Salz aufgrund der Abkühlung aus.

Unter konstanter Stickstoffzufuhr (400 l h₋₁) wurde das Salz anschließend im Vakuumschrank bei 50 °C bis zu einem niedrigen Wassergehalt getrocknet. Hiernach wurde der Rückstand analysiert, und bei einem ausreichend geringen Wert (w (H2O) < 1 %) wurde mit der Vorkondensation begonnen.

### Vorkondensation

Nach deren Synthese werden die Salze in Mini-Autoklaven in einem beheizbaren Öl-bad unter Druck bis zur Gleichgewichtseinstellung vorkondensiert, um ein Abscheiden von Monomeren und Reaktionsprodukten zu vermeiden und somit hohe Molekulargewichte der Produkte zu erreichen. Hierbei war darauf zu achten, dass die Autoklaven dicht verschlossen sind und somit die Monomere nicht mit dem Wasserdampf ausgetragen werden. Die Vorkondensation wurde bei 220 °C durchgeführt.

Die Vorkondensation von den Salzen wurde in 24 ml-Mini-Autoklaven durchgeführt, in welche das getrocknete Salz eingefüllt wurde. Diese sind Metallrohre, die an beiden Enden durch Swagelokverschlüsse verschließbar sind. Zur Aufheizung der Autoklaven diente eine Stahlwanne, die zum Schutz vor Wärmeverlusten mit einer Isoliertasche umschlossen war und mit der Wood'schen Legierung befüllt wurde.

Nach Aufschmelzen der Legierung konnten die Autoklaven mithilfe einer Halterung ins flüssige Metallbad getaucht werden. Zur Einstellung der erforderlichen Temperatur wurden eine Heizplatte, ein Tauchsieder, ein Temperaturregler und zwei Einfach-Mantelthermoelemente verwendet, die zusammen mit dem Tauchsieder in die geschmolzene Legierung eintauchten. Um Wärmeverluste zu verhindern, war das Metallbad mit Alufolie abzudecken. Die Apparatur wurde durch einen Übertemperaturschutz im Regler und durch eine ESTI-Patrone (ESTI-Apparatebau GmbH, Berlin) abgesichert, die ins flüssige Metall eintauchte.

In das Innere des Mini-Autoklaven wurde ein Teflon-Schlauch eingeführt, um ein Haften des Produktes an den Wänden nach der Abkühlung zu vermeiden. Eine Seite des Autoklaven war zu verschließen und das Salz in einer zur Inertisierung mit Stickstoff gespülten Glovebox bis zur Hälfte des Autoklaven-Volumens einzufüllen. Danach wurde dieser vollständig und dicht verschlossen.

Das Metallbad war zunächst auf 80 °C zu temperieren, um eine Schmelze zu erzeugen. Anschließend wurde die erforderliche Reaktionstemperatur am Regler eingestellt. Der Mini-Autoklav war mit Hilfe eines Drahtes an der Halterung zu befestigen, ins Metallbad zu tauchen und dieses mit Alufolie abzudecken.

Der Autoklav war jeweils nach 8 Stunden bei 220 °C wieder aus dem Metall zu entnehmen und für 1 min an der Luft abzukühlen. Nach Entfernung des Drahtes wurde er in siedendes Wasser gelegt, um verbleibendes Metall an der Außenseite zu entfernen. Zum Öffnen des Autoklaven war der jeweilige Verschluss ins Metallbad zu tauchen und dann aufzudrehen. Das Copolyamid-Produkt wurde entnommen.

### Tempern der Vorkondensate

Im letzten Herstellungsschritt war es das Ziel, durch Tempern der Vorkondensate in fester Phase bei 175 °C das noch vorhandene Lösungswasser der Salze und das bei der Polykondensation entstandene Reaktionswasser vollständig zu entfernen. Auf diese Weise wurden das Gleichgewicht auf die Polyamidseite verschoben und hochmolekulare Produkte erhalten. Deren Eigenschaften konnten dann mit Hilfe der Dynamischen Differenzkalorimetrie bestimmt werden. Hierbei wurden die Vorkondensate zunächst bei niedrigen Temperaturen getrocknet. Für das Tempern und somit zur Entfernung des Wassers aus den Vorkondensaten wurde ein Trockenschrank verwendet, in den über einen Rotameter ein inertisierender Stickstoffstrom zugeführt wurde. Die Vorkondensate wurden zunächst bei Temperaturen von 80 °C und 120 °C für jeweils 72 h unter einer konstanten Stickstoffzufuhr (VB = 400 I h₋₁) getrocknet und anschließend für 24 h bei 175 °C getempert. Die Eigenschaften der Produkte sind in Tab. 1 zusammengefasst.

### Zusammensetzungen der Copolyamide

Die unterschiedlichen stöchiometrisch äquivalenten Zusammensetzungen der Referenz-Copolyamide C1 bis C5 sind in Tab. 1 aufgeführt.

| | **C1** | **C2** | **C3** | **C4** | **C5** |
|---|---|---|---|---|---|
| **Stoff** | W | w | w | w | w |
| | [%] | [%] | [%] | [%] | [%] |
| **Caprolactam** | 30,4 | 28,3 | 32,6 | 25,4 | 35,4 |
| **Adipinsäure** | 33,5 | 33,5 | 33,5 | 36,3 | 30,7 |
| **Hexamethylendiamin** | 14,9 | 12,2 | 17,6 | 17,1 | 12,6 |
| **Dicycan** | 21,3 | 26,0 | 16,4 | 21,3 | 21,3 |
| **Einwaage nach Salz** | | | | | |
| **Capro (A)** | 30,4 | 28,3 | 32,6 | 25,4 | 35,4 |
| **HMD + ADS (B)** | 33,5 | 27,6 | 39,7 | 38,5 | 28,5 |
| **D + ADS (C)** | 36,2 | 44,2 | 27,8 | 36,2 | 36,2 |

| **Komponenten in PA** | | | | | |
|---|---|---|---|---|---|
| **PA 6** | 33,1 | 30,8 | 35,5 | 27,9 | 38,3 |
| **PA 66** | 31,5 | 26 | 37,3 | 36,5 | 26,6 |
| **PA D6** | 35,4 | 43,2 | 27,2 | 35,7 | 35,1 |
| **Tg [°C]** | 88,0 | 94,0 | 77,0 | 84,0 | 87,0 |
| **Tm [°C]** | 207,5 | 212,1 | 191,6 | 212,9 | 207,2 |
| **ΔHₘ [J/g]** | 4,0 | 3,0 | 3,0 | 19,0 | 4,0 |
| **K [%]** | 1,8 | 1,3 | 1,3 | 8,4 | 1,8 |
| **VZ [ml/g]** | 155,0 | 163,0 | 148,0 | 150,0 | 130,0 |
| **Amino** | 92,2 | 57,7 | 84,0 | 62,8 | 64,3 |
| **Carboxyl** | 61,0 | 63,0 | 55,0 | 64,0 | 70,0 |

### Analysen der Copolyamide

### Dynamische Differenzkalorimetrie

Zur Ermittlung der Glasübergangs- und Schmelztemperatur sowie der Kristallinität waren jeweils 8,5 mg des Copolyamids in ein Pfännchen einzuwiegen, mit der Referenzprobe (Luft) in den Ofen des Differenzkalorimeters zu stellen und die DSC-Messzelle mit Stickstoff (VB = 50 ml min₋₁) für 5 min zu spülen. Die Zelle wurde dann durch ein Temperaturprogramm mit einer Heizrate β = 20 K min₋₁ bis auf 380 °C (Copolyamid B) bzw. auf 280 °C (Copolyamid A) aufgeheizt, um den Einfluss der thermischen Vorgeschichte zu eliminieren. Nach Abkühlen des Ofens mit β = 20 K min⁻¹ auf 60 °C war die Zelle in einem zweiten Heizzyklus erneut mit β = 20 K min⁻¹ auf die genannten Temperaturen aufzuheizen, und anschließend war die Apparatur abzukühlen. Die Endtemperaturen wurden jeweils für 5 min konstant gehalten. Aus den erhaltenen Kurvenverläufen wurden die Glasübergangs- T_{g} und Schmelztemperatur Tₘ sowie die Schmelzenthalpie ΔHₘ mit Hilfe eines Auswertungsprogramms bestimmt.

### C6 (Referenz)

3,055 g einer wässrigen Lösung von Hexamethylendiamin (69,96 Gew.-%), 5,224 g Adipinsäure, 3,651 g Dicycan und 4,181 g Caprolactam wurden in ein Reagenzglas eingewogen, in einen ungerührten Autoklav gestellt und 3 mal mit je 10 bar Stickstoff gespült. Der Autoklav wurde auf 280 °C aufgeheizt und bei dieser Temperatur ein Überdruck von 16 bar für 2 Stunden gehalten. Anschließend wurde innerhalb von 110 Minuten der Autoklav auf Umgebungsdruck entspannt und unter Stickstoff-Strom für 120 Minuten bei der gleichen Temperatur die Nachkondensation durchgeführt. Das entnommene Produkt wurde mit Wasser extrahiert und getrocknet.

Das unter diesen Bedingungen hergestellte transparente, klare Polymer mit einer Zusammensetzung von 30/30/40 Gew.-% der Komponenten PA6/PA66/PAD6 zeigte eine Viskositätszahl von 85 bis 132 mL/g (0,5 Gew.-% in konz. Schwefelsäure) und eine Glasübergangstemperatur zwischen 77 °C und 79 °C (DSC, 2. abkühlender Lauf mit 20 K/min). Die bei Raumtemperatur zubereitete Lösung von 10 Gew.-% des Terpolymers in einem Lösungsmittelgemisch aus Ethanol und Wasser (80 : 20 Gew.-%) war klar und zeigte sich bei Raumtemperatur stabil.

### C7

2,738 g einer wässrigen Lösung von Hexamethylendiamin (69,96 Gew.-%), 5,314 g Adipinsäure, 4,181 g Dicycan und 3,747 g Caprolactam wurden in ein Reagenzglas eingewogen, in einen ungerührten Autoklav gestellt und 3 mal mit je 10 bar Stickstoff gespült. Der Autoklav wurde auf 280 °C aufgeheizt und bei dieser Temperatur ein Überdruck von 16 bar für 2 Stunden gehalten. Anschließend wurde innerhalb von 110 Minuten der Autoklav auf Umgebungsdruck entspannt und unter Stickstoff-Strom für 120 Minuten bei der gleichen Temperatur die Nachkondensation durchgeführt. Das entnommene Produkt wurde mit Wasser extrahiert und getrocknet.

Das unter diesen Bedingungen hergestellte transparente, klare Polymer mit einer Zusammensetzung von 27/27/46 Gew.-% der Komponenten PA6/PA66/PAD6 zeigte eine Viskositätszahl von 84 bis 112 mL/g (0,5 Gew.-% in konz. Schwefelsäure) und eine Glasübergangstemperatur zwischen 88 °C und 91 °C(DSC, 2. abkühlender Lauf mit 20 K/min). Die bei Raumtemperatur zubereitete Lösung von 10 Gew.-% des Terpolymers in einem Lösungsmittelgemisch aus Ethanol und Wasser (80 : 20 Gew.-%) war klar und zeigte sich bei Raumtemperatur stabil.

## Patentansprüche

1. Lösung, enthaltend ein Terpolymer aus den Monomeren der Komponenten A, B und C, deren Gesamtmenge 100 Gew.% ergibt,
a) 20 bis 30 Gew.% Lactame als Komponente A,
b) 20 bis 27,5 Gew.% äquimolare Mengen von Adipinsäure und einem oder mehreren aliphatischen Diaminen als Komponente B,
c) 45 bis 55 Gew.% äquimolare Mengen an Adipinsäure und 4,4'-**Diaminodicyclohexylmethan** (Dicycan) als Komponente C,
in einem aromatenfreien Lösungsmittelsystem, enthaltend
50 bis 100 Gew.% C₁₋₄-Alkanol,
0 bis 50 Gew.-% Wasser und
maximal 10 Gew.% weitere aromatenfreie Lösungsmittel,
wobei die Gesamtmenge des Lösungsmittelsystems 100 Gew.-% ergibt.

2. Lösung nach Anspruch 1, **dadurch gekennzeichnet, dass** im Lösungsmittelsystem 70 bis 100 Gew.% C₁₋₄-Alkanol, 0 bis 30 Gew.% Wasser und maximal 5 Gew.%, vorzugsweise maximal 2,5 Gew.% weitere aromatenfreie Lösungsmittel vorliegen, wobei die Gesamtmenge des Lösungsmittelsystems 100 Gew.-% ergibt.

3. Lösung nach einem der Ansprüche 1 oder 2, zusätzlich enthaltend Flammschutzmittel, Viskositätsmodifikatoren, Fließmittel, Filmbildungshilfen, Haftvermittler oder Gemische davon.

4. Lösung nach einem der Ansprüche 1 bis 3, **dadurch gekennzeichnet, dass** das Lactam der Komponente A Caprolactam ist und das aliphatische Diamin der Komponente B ein endständiges lineares C₄₋₆-Alkylendiamin ist.

5. Verwendung einer Lösung nach einem der Ansprüche 1 bis 4 zum Beschichten von festen Oberflächen.

6. Terpolymer aus den Monomeren der Komponenten A, B und C, deren Gesamtmenge 100 Gew.% ergibt,
a. 20 bis 30 Gew.% Lactame als Komponente A,
b. 20 bis 27,5 Gew.% äquimolare Mengen von Adipinsäure und einem oder mehreren aliphatischen Diaminen als Komponente B,
c. 45 bis 55 Gew.% äquimolare Mengen von Adipinsäure und 4,4'-Diaminodicyclohexylmethan (Dicycan) als Komponente C.

7. Terpolymer nach Anspruch 6, **dadurch gekennzeichnet, dass** das Lactam der Komponente A Caprolactam ist und das aliphatische Diamin in der Komponente B Hexamethylendiamin ist.

8. Verfahren zur Herstellung von Terpolymeren nach Anspruch 6 oder 7 durch Umsetzen der Monomere der Komponenten A, B und C unter Wasserzusatz bei einer Temperatur im Bereich von 210 bis 290°C und einem Druck im Bereich von 0.3 bis 5 MPa (3 bis 50 bar).

9. Verwendung der Terpolymere gemäß einem der Ansprüche 6 oder 7 zum Beschichten von festen Oberflächen.

## Claims

1. A solution comprising a terpolymer formed from the monomers of components A, B and C, the total amount of which adds up to 100% by weight,
a) 20 to 30% by weight of lactams as component A,
b) 20 to 27.5% by weight of equimolar amounts of adipic acid and one or more aliphatic diamines as component B,
c) 45 to 55% by weight of equimolar amounts of adipic acid and 4,4'-diaminodicyclohexylmethane (dicycan) as component C,
in an aromatics-free solvent system comprising
50 to 100% by weight of C₁₋₄-alkanol,
0 to 50% by weight of water and
not more than 10% by weight of further aromatics-free solvents,
where the total amount of the solvent system adds up to 100% by weight.

2. The solution according to claim 1, wherein 70 to 100% by weight of C₁₋₄-alkanol, 0 to 30% by weight of water and not more than 5% by weight, preferably not more than 2.5% by weight, of further aromatics-free solvents are present in the solvent system, where the total amount of the solvent system adds up to 100% by weight.

3. The solution according to either of claims 1 and 2, additionally comprising flame retardants, viscosity modifiers, flow regulators, film formation aids, adhesion promoters or mixtures thereof.

4. The solution according to any of claims 1 to 3, wherein the lactam of component A is caprolactam and the aliphatic diamine of component B is a terminal linear C₄₋₆-alkylenediamine.

5. The use of a solution according to any of claims 1 to 4 for coating solid surfaces.

6. A terpolymer formed from the monomers of components A, B and C, the total amount of which adds up to 100% by weight,
a. 20 to 30% by weight of lactams as component A,
b. 20 to 27.5% by weight of equimolar amounts of adipic acid and one or more aliphatic diamines as component B,
c. 45 to 55% by weight of equimolar amounts of adipic acid and 4,4'-diaminodicyclohexylmethane (dicycan) as component C.

7. The terpolymer according to claim 6, wherein the lactam of component A is caprolactam and the aliphatic diamine in component B is hexamethylenediamine.

8. A process for preparing terpolymers according to claim 6 or 7 by reacting the monomers of components A, B and C with addition of water at a temperature in the range from 210 to 290°C and a pressure in the range from 0.3 to 5 MPa (3 to 50 bar).

9. The use of the terpolymers according to either of claims 6 and 7 for coating solid surfaces.

## Revendications

1. Solution, contenant un terpolymère des monomères des composants A, B et C, dont la quantité totale est de 100 % en poids,
a) 20 à 30 % en poids de lactames en tant que composant A,
b) 20 à 27,5 % en poids de quantités équimolaires d'acide adipique et d'une ou de plusieurs diamines aliphatiques en tant que composant B,
c) 45 à 55 % en poids de quantités équimolaires d'acide adipique et de 4,4'-diaminodicyclohexylméthane (dicycan) en tant que composant C,
dans un système de solvants sans composés aromatiques, contenant
50 à 100 % en poids d'un alcanol en C₁₋₄,
0 à 50 % en poids d'eau et
au plus 10 % en poids d'autres solvants sans composés aromatiques,
la quantité totale du système de solvants étant de 100 % en poids.

2. Solution selon la revendication 1, **caractérisée en ce que** 70 à 100 % en poids d'un alcanol en C₁₋₄, 0 à 30 % en poids d'eau et au plus 5 % en poids, de préférence au plus 2,5 % en poids, d'autres solvants sans composés aromatiques sont présents dans le système de solvants, la quantité totale du système de solvants étant de 100 % en poids.

3. Solution selon l'une quelconque des revendications 1 ou 2, contenant également des agents ignifuges, des modificateurs de viscosité, des agents d'écoulement, des adjuvants filmogènes, des promoteurs d'adhésion ou leurs mélanges.

4. Solution selon l'une quelconque des revendications 1 à 3, **caractérisée en ce que** le lactame du composant A est le caprolactame et la diamine aliphatique du composant B est une alkylène-diamine en C₄₋₆ linéaire terminale.

5. Utilisation d'une solution selon l'une quelconque des revendications 1 à 4 pour le revêtement de surfaces solides.

6. Terpolymère des monomères des composants A, B et C, dont la quantité totale est de 100 % en poids,
a. 20 à 30 % en poids de lactames en tant que composant A,
b. 20 à 27,5 % en poids de quantités équimolaires d'acide adipique et d'une ou de plusieurs diamines aliphatiques en tant que composant B,
c. 45 à 55 % en poids de quantités équimolaires d'acide adipique et de 4,4'-diaminodicyclohexylméthane (dicycan) en tant que composant C.

7. Terpolymère selon la revendication 6, **caractérisé en ce que** le lactame du composant A est le caprolactame et la diamine aliphatique du composant B est l'hexaméthylène-diamine.

8. Procédé de fabrication de terpolymères selon la revendication 6 ou 7, par mise en réaction des monomères des composants A, B et C avec ajout d'eau à une température dans la plage allant de 210 à 290 °C et à une pression dans la plage allant de 0,3 à 5 MPa (3 à 50 bar).

9. Utilisation des terpolymères selon l'une quelconque des revendications 6 ou 7 pour le revêtement de surfaces solides.
